# EUROPÄISCHE PATENTSCHRIFT

(11) **EP 2 831 553 B1**
(45) Veröffentlichungstag und Bekanntmachung des Hinweises auf die Patenterteilung: **16.06.2021**
(21) Anmeldenummer: 13706956.3
(22) Anmeldetag: 22.02.2013
(51) Int. Cl.: G01F 23/296, G01F 25/00

(54) **VORRICHTUNG ZUR ÜBERWACHUNG EINES VORBESTIMMTEN FÜLLSTANDS**
APPARATUS FOR MONITORING A PREDETERMINED FILLING LEVEL
DISPOSITIF DE SURVEILLANCE D'UN NIVEAU DE LIQUIDE

(30) Priorität: 26.03.2012 DE 102012102589
(43) Veröffentlichungstag der Anmeldung: 04.02.2015
(73) Patentinhaber: Endress+Hauser SE+Co. KG, 79689 Maulburg (DE)
(72) Erfinder: LOPATIN, Sergej, 79540 Lörrach (DE); D'ANGELICO, Sascha, 79595 Rümmingen (DE); MÜLLER, Alexander, 79361 Sasbach-Jechtingen (DE); DREYER, Volker, 79541 Lörrach (DE)
(74) Vertreter: Andres, Angelika Maria
(86) Internationale Anmeldenummer: PCT/EP2013/053577
(87) Internationale Veröffentlichungsnummer: WO 2013/143794

(56) Entgegenhaltungen:
- EP-A1- 0 123 189
- DE-A1- 3 005 851
- DE-A1- 10 014 724
- DE-A1-102004 036 359
- DE-A1-102004 059 050
- DE-A1-102009 026 685
- DE-A1-102010 028 161
- DE-A1-102010 028 303

## Beschreibung

Die vorliegende Erfindung betrifft eine Vorrichtung zur Überwachung eines vorbestimmten Füllstands eines Mediums in einem Behälter, mit einer mechanisch schwingfähigen Einheit, mit einer Antriebs-/Empfangseinheit zum Anregen der mechanisch schwingfähigen Einheit zu mechanischen Schwingungen und zum Empfangen der Schwingungen der mechanisch schwingfähigen Einheit, und mit einer Elektronikeinheit zur Erzeugung eines elektrischen Anregungssignals und zur Auswertung eines elektrischen Empfangssignals. Bei dem vorbestimmten Füllstand handelt es sich um einen zu überwachenden maximalen oder minimalen Grenzstand eines Fluids oder eines Schüttguts in einem Behälter.

Zur Erkennung von Gasen, Flüssigkeiten und Schüttgütern kommen häufig vibronische Messgeräte zum Einsatz, welche eine Veränderung der Schwingungseigenschaften, wie beispielsweise Frequenz oder Amplitude, einer schwingfähigen Einheit detektieren. Zur Detektion von Flüssigkeiten dient meist eine schwingfähige Einheit in Form einer Schwinggabel, deren Schwingfrequenz ausgewertet wird. Derartige Messgeräte werden von der Anmelderin unter dem Namen Liquiphant in großer Vielfalt hergestellt und vertrieben. Zur Erfassung eines maximalen Grenzstands wird die Schwingfrequenz erfasst und mit einem vorbestimmten Grenzwert verglichen. Ist der Grenzwert überschritten, schaltet das Messgerät in den bedeckten Zustand. Neben einem maximalen oder minimalen Grenzstand einer Flüssigkeit ist an hand der Schwingungseigenschaften auch die Dichte oder die Viskosität bestimmbar.

Zur Grenzstandmessung von Schüttgütern sind Messgeräte mit einer schwingfähigen Einheit in Form eines Stabes oder auch in Form einer Gabel bekannt. Derartige Messgeräte bietet die Anmelderin unter der Bezeichnung Soliphant an. Vornehmlich wird hierbei die Amplitude der Schwingungen der schwingfähigen Einheit ausgewertet, da sich die Schwingungsamplitude einer in einem gasförmigen Medium schwingenden schwingfähigen Einheit bei der Bedeckung mit Medium auf Grund von mechanischen Verlusten senkt.

In der Regel erfolgt die Schwingungsanregung mittels einer Schwingkreiselektronik, welche aus dem Empfangssignal der schwingfähigen Einheit ein Anregungssignal erzeugt. Diese Schwingkreiselektronik weist zumindest einen Frequenzfilter, einen Phasenschieber und einen Signalverstärker auf und bewirkt, dass die schwingfähige Einheit stets auf Resonanz angeregt wird.

Um auch bei starker Dämpfung des Schwingsystems eine Schwingung zu gewährleisten, muss die Schwingkreiselektronik in einem breiten Frequenzbereich ein stabiles Phasenverhalten und eine hohe Signaldynamik aufweisen. Weiterhin sind Präzisionsbauteile erforderlich, welche die Phasenlage und Verstärkung bestimmen, um auch bei einer Veränderung der Phaseneigenschaften, beispielsweise durch nicht-newtonsche Flüssigkeiten, ein korrektes Schaltverhalten zu gewährleisten. Genannte Anforderungen führen zu einem aufwendigen Aufbau von Sensor und Elektronik.

Aus der DE102010028303A1 ist ein vibronisches Füllstandsmessgerät bekannt geworden, bei welchem aus dem Empfangssignal mittels eines Bandpassfilters mit einstellbarer Mittenfrequenz ein Nutzsignal herausgefiltert wird. Aus dem Nutzsignal wird dann eine von der jeweiligen Prozessgröße abhängige Schwingungseigenschaft, und daraus wiederum die Prozessgröße ermittelt.

Die DE102009026685A2 wiederum beschreibt ein Frequenz-Sweep-Verfahren zur Anregung vibronischer Sensoren. Dabei wird die schwingfähige Einheit mittels eines Frequenzsuchlaufs (Sweep) innerhalb eines vorbestimmten Frequenzbandes im Arbeitsbereich der schwingfähigen Einheit sukzessive mit aufeinander folgenden diskreten Erregerfrequenzen zu Schwingungen angeregt und die Schwingungen in Form von Empfangssignalen empfangen. Zur Bestimmung der Prozessgröße wird die Erregerfrequenz ermittelt, die einer vorgegebene Phasenverschiebung zwischen Anrege- und Empfangssignal entspricht.

Die Schrift EP 0 123 189 A1 offenbart einen piezoelektrischen Sensor zur Bestimmung eines Füllstands, wobei der Sensor mit einem Signal eines Wobbelgenerators beaufschlagt wird. Die Signalfrequenz liegt in einem Frequenzbereich, der nur die sich in einem vorgegebenen Umgebungstemperaturbereich und einem vorbestimmten Zustand des Sensors, z. B. in Luft, sich einstellenden Resonanzfrequenz liegt. Der Wobbelbereich ist dabei größer als der Bereich möglicher Resonanzfrequenzen des piezoelektrischen Schwingers, z. B. in Luft, und in dem vorgesehenen Temperaturbereich. Der Wobbelbereich überlappt also nicht mit dem Bereich möglicher Resonanzfrequenzen des piezoelektrischen Schwingers im eingetauchten Zustand. Bei jedem Zyklus, den der Wobbelgenerator durchläuft, wird mit Hilfe eines Phasendetektors festgestellt, ob die Resonanzfrequenz des piezoelektrischen Schwingers erreicht wird oder nicht.

Die DE 10 2010 028 161 A1 beschreibt ein Verfahren zur Bestimmung des Erreichens eines vorgegebenen Grenzfüllstands. Die schwingfähige Einheit wird mit einem Frequenzsweep, d. h. diskreten aufeinanderfolgenden Frequenzen innerhalb eines begrenzten Frequenzbandes zu Schwingungen angeregt. Das Frequenzband ist derart gewählt, dass die Frequenzen der Schwingungen der schwingfähigen Einheit zwischen Sendesignal und Empfangssignal sowohl im flüssigen als auch im gasförmigen Medium innerhalb dieses Frequenzbandes liegen. Das aus einem Frequenzsweep resultierende Empfangssignal weist bei der Resonanzfrequenz einen Peak maximaler Amplitude auf. Die aus dem Empfangssignal bestimmten Größen, u. a. die Schwingungsamplitude, werden mit einem Grenzwert verglichen. Dann wird geprüft, ob mindestens eines der Kriterien für den Bedecktzustand erfüllt ist, und ggf. ein entsprechendes Signal ausgegeben.

Die Aufgabe der Erfindung besteht darin, eine kostengünstige Vorrichtung zur vibronischen Grenzstanderfassung bereit zu stellen.

Die Aufgabe wird dadurch gelöst, dass die Elektronikeinheit dazu ausgestaltet ist, die mechanisch schwingfähige Einheit mittels der Antriebs-/Empfangseinheit innerhalb eines fest vorgegebenen Frequenzbandes mit diskreten aufeinanderfolgenden Erregerfrequenzen zu mechanischen Schwingungen anzuregen, wobei das Frequenzband die Resonanzfrequenz der mechanisch schwingfähigen Einheit bei einer Schwingung unter Standardbedingungen, d.h. in Luft bei Normaldruck und Raumtemperatur, enthält und einen Frequenzbereich mit Frequenzen aufweist, die höchstens 15% von der Resonanzfrequenz bei Standardbedingungen abweichen, wobei das Anregungssignal nicht mit Frequenzen erzeugt wird, mit denen eine Schwingung der mechanisch schwingfähigen Einheit (11) im festen oder flüssigen Medium bei vollständig eingetauchter schwingfähiger Einheit anregbar wäre,
und dass die Elektronikeinheit dazu ausgestaltet ist, zu detektieren, ob innerhalb des vorgegebenen Frequenzbandes eine Schwingung der mechanisch schwingfähigen Einheit auftritt, deren Amplitude einen vorgegebenen Schwellenwert überschreitet und das Erreichen des vorbestimmten Füllstands anhand eines Ausbleibens der Schwingung oder das Unterschreiten des vorbestimmten Füllstands anhand eines Einsetzens der Schwingungen der mechanisch schwingfähigen Einheit zu detektieren.

Als Resonanzfrequenz bei Standardbedingungen gilt hier und im Folgenden die Resonanzfrequenz einer Schwingung in Luft bei Normaldruck und Raumtemperatur, beispielsweise 20°C. Die Resonanzfrequenz bei Standardbedingungen ist für eine bestimmte Ausgestaltung einer schwingfähigen Einheit berechenbar oder bei der Fertigung bestimmbar. Das Frequenzband, innerhalb dessen die Frequenzen des Anregungssignals zur Anregung der schwingfähigen Einheit zu Schwingungen liegen, ist schmal, d.h. es werden nur Frequenzen in einem engen Bereich um die Resonanzfrequenz bei Standardbedingungen abgedeckt. Unter einem schmalen Frequenzband ist ein Frequenzbereich zu verstehen, welcher Frequenzen umfasst, die um höchstens 15%, vorzugsweise um höchstens 5% von der Resonanzfrequenz bei Standardbedingungen abweichen. Das Anregungssignal wird nie mit Frequenzen erzeugt, mit welchen eine Schwingung im festen oder flüssigen Medium bei vollständig eingetauchter schwingfähiger Einheit anregbar wäre.

Erfindungsgemäß ist die Elektronikeinheit derart ausgestaltet, dass sie die schwingfähige Einheit mittels eines Frequenzsweeps minimaler Bandbreite nur in dem Frequenzbereich zu Schwingungen anregt, in welchem sich die Resonanzfrequenz einer nicht vollständig in das zu detektierende Medium eingetauchte schwingfähigen Einheit befindet. In einer Ausgestaltung umfasst der Frequenzbereich nur Frequenzen, welche der Resonanzfrequenz in Luft und anderen Gasen entsprechen. In einer anderen Ausgestaltung umfasst der Frequenzbereich zusätzlich Frequenzen, mit welchen eine nur teilweise, insbesondere nur geringfügig, in das Medium eingetauchte oder eine geringfügig mit Mediumsansatz bedeckte schwingfähige Einheit schwingt. Ist die schwingfähige Einheit von dem zu detektierenden Medium zumindest im Wesentlichen unbedeckt, schwingt die schwingfähige Einheit mit einer Amplitude, welche den vorgegebenen Grenzwert übersteigt. Die Elektronikeinheit detektiert vorzugsweise lediglich, ob eine solche Schwingung auftritt oder nicht und erzeugt entsprechend ein Schaltsignal, welches angibt ob der zu überwachende vorbestimmte Füllstand erreicht ist. Die Vorrichtung ist besonders als so genannter Max-Schalter zur Überwachung eines maximal zulässigen Füllstands geeignet, da hierbei der frei schwingende Zustand dem Normalzustand entspricht. Zur Detektion des Erreichens des zu überwachenden Füllstands wird ein Ausbleiben der Schwingungen detektiert, was mit hoher Zuverlässigkeit möglich ist. Prinzipiell ist jedoch auch der umgekehrte Fall möglich, bei welchem das Einsetzen einer Schwingung beim Unterschreiten eines vorbestimmten minimalen Füllstands detektiert wird.

Gemäß einer Ausgestaltung der Vorrichtung detektiert die Elektronikeinheit die Amplitude des elektrischen Empfangssignals der Antriebs-/Empfangseinheit und vergleicht sie mit einem vorgegebenen Grenzwert. Der Grenzwert für die Amplitude des Empfangssignals ist derart festgesetzt, dass er oberhalb von auftretendem Signalrauschen liegt und bei einer resonanten Schwingung überschritten wird.

In einer Ausgestaltung beinhaltet das Frequenzband Frequenzen zwischen 85% und 105%, insbesondere zwischen 95% und 102%, der Resonanzfrequenz bei Standardbedingungen. Bei Temperaturänderungen ändert sich auch die Resonanzfrequenz der schwingfähigen Einheit. Das Frequenzband ist derart gewählt, dass es zum einen alle Resonanzfrequenzen umfasst, welche mit den Temperaturen aus dem Temperaturbereich, für welche die Vorrichtung spezifiziert ist, einhergehen und zum anderen so schmal wie möglich ist. Weiterhin ist das Frequenzband derart vorgebbar, dass nur einer vollständig unbedeckten schwingfähigen Einheit zugeordnete Resonanzfrequenzen innerhalb des angeregten Frequenzbands liegen, oder das Frequenzband wird derart gewählt, dass das angeregte Frequenzband auch solche Frequenzen umfasst, welche bei einer geringfügig in das Medium eingetauchten oder leicht mit Ansatz bedeckten schwingfähigen Einheit auftreten. In letzterem Fall wird die Verfügbarkeit der Vorrichtung erhöht ohne die Sicherheit zu beeinträchtigen.

Gemäß einer Ausgestaltung ist die Elektronikeinheit derart konfiguriert, dass das Frequenzband mehrfach pro Sekunde durchfahren wird. Hierzu ist in Abhängigkeit der Breite des Frequenzbands eine entsprechende Schrittweite zwischen den einzelnen Erregerfrequenzen des Frequenzbands vorgegeben. Die Vorrichtung kann somit das Erreichen des zu überwachenden Füllstands besonders schnell anzeigen. Vorzugsweise erzeugt die Elektronikeinheit kontinuierlich ein Anregungssignal, sodass die schwingfähige Einheit ständig mit einem Frequenzsweep zu Schwingungen angeregt wird. Das Frequenzband ist hierbei jeweils in dieselbe Richtung, d.h. jeweils mit aufsteigenden oder mit absteigenden Frequenzen, oder abwechselnd in unterschiedlicher Richtung durchfahrbar.

In einer Ausgestaltung ist die Elektronikeinheit dazu ausgestaltet, die mechanisch schwingfähige Einheit mit Frequenzen innerhalb eines zweiten vorgegebenen Frequenzbands anzuregen, wobei die Frequenzen des zweiten Frequenzbands oberhalb der Frequenzen des ersten Frequenzbands liegen, und eine Schwingung innerhalb des zweiten Frequenzbands zu detektieren, deren Amplitude einen vorgegebenen Schwellenwert übersteigt. Für den Fall, dass die Amplitude den Schwellenwert übersteigt, erzeugt die Elektronikeinheit ein Alarmsignal.

Der Frequenzsweep im zweiten Frequenzbereich dient der Korrosionserkennung. Ist innerhalb des ersten Frequenzbands keine Schwingung detektierbar, führt die Elektronikeinheit zur Korrosionserkennung den Frequenzsweep im zweiten Frequenzband durch. Auch hier vergleicht die Elektronikeinheit das elektrische Empfangssignal der Antriebs-/Empfangssignal mit einem vorgegebenen Schwellenwert, welcher oberhalb des Rauschpegels liegt. Tritt auch in diesem zweiten Bereich keine Schwingung auf, ist der zu überwachende maximale Grenzfüllstand erreicht oder ein Fehler im Messgerät ist aufgetreten. Detektiert die Elektronikeinheit eine Schwingung im zweiten Frequenzband, so hat sich die Resonanzfrequenz der schwingfähigen Einheit auf Grund von Korrosion verschoben und die Vorrichtung gibt ein Alarmsignal aus, da in diesem Fall zumindest die schwingfähige Einheit auszutauschen ist.

In einer bevorzugten Ausgestaltung umfasst das zweite Frequenzband Frequenzen zwischen 105% und 107% der Resonanzfrequenz bei Standardbedingungen.

In einer Ausgestaltung ist die Elektronikeinheit zumindest teilweise als Mikrocontroller ausgestaltet. In einer besonders einfachen Ausgestaltung besteht die Elektronikeinheit nur, oder zumindest im Wesentlichen, aus einem Mikrocontroller. Weitere Komponenten des Messgeräts sind beispielsweise eine Energieversorgung oder Mittel zum Anschließen an eine extern angeordnete Energieversorgung, ein Signalausgang zur Ausgabe eines den Füllstand anzeigenden Schaltsignals, beispielsweise in Form eines 4-20mA-Signals, und vorzugsweise mindestens eine Leuchtdiode zur optischen Anzeige des Schaltzustands oder eines Fehlerzustands des Messgeräts, beispielsweise aufgetretener Korrosion. Eine Ausgestaltung mit nur einem Mikrocontroller, welcher das Anregungssignal für die Antriebs-/Empfangseinheit erzeugt und das Empfangssignal der Antriebs-/Empfangseinheit zur Bestimmung des Erreichens des vorbestimmten Füllstands auswertet ist besonders kostengünstig einfach implementierbar.

Bei einer bevorzugten Ausgestaltung weist die Antriebs-/Empfangseinheit mindestens ein piezoelektrisches Element auf. Beispielsweise handelt es sich um einen piezoelektrischen Stapelantrieb mit Sendeelementen und Empfangselementen, oder um einen Bimorphantrieb. Die Antriebs-/Empfangseinheit kann auch magnetoelektrisch oder magnetostriktiv ausgestaltet sein.

Eine Ausgestaltung sieht vor, dass die schwingfähige Einheit als Schwinggabel, Stab, oder Membran ausgestaltet ist.

Die Erfindung wird anhand der nachfolgenden Figuren näher erläutert.
- Fig. 1: zeigt schematisch ein vibronisches Füllstandsmessgerät;
- Fig. 2: zeigt ein Blockschaltbild der Elektronikeinheit eines Messgerätes nach Fig. 1.

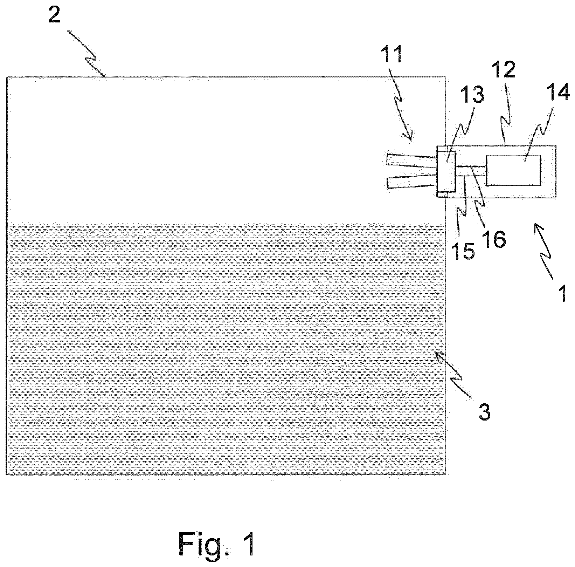

In Fig. 1 ist ein erfindungsgemäßes vibronisches Messgerät 1 dargestellt, welches in einen Behälter 2 eingebracht ist. Der Behälter 2 ist teilweise mit einer Flüssigkeit 3 gefüllt, deren Füllhöhe in Bezug auf einen maximal zulässigen Grenzstand zu überwachen ist. Gleichermaßen ist das Messgerät 1 jedoch auch zur Überwachung eines Füllstands eines Schüttguts geeignet. Das Messgerät 1 ist auf der Höhe in die Wandung des Behälters 2 eingebracht, welche dem zu überwachenden Füllstand entspricht, wobei das Messgerät 1 im Wesentlichen nur mit der schwingfähigen Einheit 11 in den Behälter 2 hineinragt, während ein Gehäuse 12 außerhalb des Behälters 2 verbleibt. In dem Gehäuse 12 ist eine Elektronikeinheit 14 untergebracht, welche über eine elektrische Sendeleitung 15 und über eine elektrische Empfangsleitung 16 mit der Antriebs-/Empfangseinheit 12 verbunden ist. Je nach Ausgestaltung der Antriebs-/Empfangseinheit 13 können Sendeleitung und Empfangsleitung auch als gemeinsame Sendeund Empfangsleitung ausgestaltet sein. Die Antriebs-/Empfangseinheit 13 ist mit der mechanisch schwingfähigen Einheit 11 gekoppelt und dient deren Anregung zu mechanischen Schwingungen und zum Empfangen der mechanischen Schwingungen.

Die schwingfähige Einheit 11 ist gabelförmig, wobei zwei stab- oder paddelförmige Zinken an einer Membran befestigt sind. Die Membran verschließt das zumindest abschnittsweise rohrförmige Gehäuse 12 endseitig. Eine vorteilhafte Ausgestaltung einer so genannten Schwinggabel ist beispielsweise in der EP 985916 B1 offenbart. In einer nicht dargestellten anderen Ausgestaltung des Messgeräts 1 besteht die schwingfähige Einheit 11 nur aus der Membran oder die schwingfähige Einheit 11 ist als so genannter Einstab ausgestaltet. Ein Einstab weist in der Regel ein rohrförmiges äußeres Element und ein stabförmiges inneres Element auf, wobei das innere Element mit dem äußeren gekoppelt ist und der mechanischen Entkopplung des Schwingsystems dient, sodass im Wesentlichen keine Kräfte auf die Einspannung wirken. Ein vorteilhaft ausgestalteter Einstab ist beispielsweise in der Offenlegungsschrift EP 1616156 A1 beschrieben.

Die Antriebs-/Empfangseinheit 13 ist vorzugsweise als piezoelektrische Wandlereinheit ausgestaltet. Es kann sich aber auch um einen magneto-elektrischen oder magnetostriktiven Antrieb, oder um eine Kombination aus unterschiedlich ausgestalteter Antriebs- und Empfangseinheit handeln. Piezoelektrische Antriebs-/Empfangseinheiten 13 für vibronische Messgeräte sind in unterschiedlichen Ausführungsformen hinlänglich aus dem Stand der Technik bekannt. Im Wesentlichen wird zwischen der Einpiezotechnik und der Zweipiezotechnik unterschieden, wobei beide Techniken für das erfindungsgemäße Messgerät 1 gleichermaßen geeignet sind.

Bei der Einpiezotechnik dient dasselbe piezoelektrische Element als Sendeelement zum Anregen der mechanisch schwingfähigen Einheit 11 zu Schwingungen und als Empfangselement zum Empfangen der mechanischen Schwingungen und Umwandeln in ein auslesbares elektrisches Signal. Das piezoelektrische Element ist vorzugsweise scheibenförmig und beispielsweise mittels eines Klebers flächig an der schwingfähigen Einheit 11 befestigt. In einer vorteilhaften Variante ist ein scheibenförmiges piezoelektrisches Element zur Bildung von je zwei Sende- und Empfangselektroden in vier Segmente unterteilt, welche sich im Wesentlichen punktförmig gegenüber liegen. Diese Ausführungsform ist in der EP 1281051 B1 beschrieben.

Bei der Zweipiezotechnik sind Sendeelement und Empfangselement separat ausgeführt. In einer Variante für eine Schwinggabel sind mehrere Sendeelemente und Empfangselemente in einem Stapel angeordnet und unter Vorspannung zwischen einem Befestigungsmittel im Gehäuse 12 und der Membran der gabelförmigen schwingfähigen Einheit 11 angeordnet. Ein derartiger Aufbau ist beispielsweise in der EP 1261437 B1 offenbart.

Die Elektronikeinheit 14 steuert die Antriebs-/Empfangseinheit 13, indem sie diese mit einem elektrischen Wechselspannungssignal in Form eines Frequenzsweeps beaufschlagt.

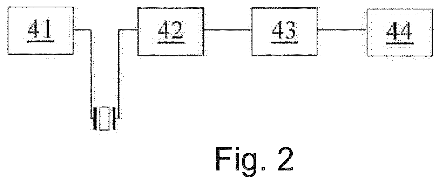

In der Fig. 2 ist der Aufbau der Elektronikeinheit 14 eines Messgerätes 1 nach Fig. 1 in Form eines Blockschaltbilds skizziert. Vorzugsweise ist die Elektronikeinheit 14 digital ausgestaltet, wobei zusätzlich einige analoge Bauteile zur Signalaufbereitung von Vorteil sind. Beispielsweise handelt es sich bei der Elektronikeinheit 14 um einen Mikrocontroller.

Der Sweepgenerator 41 erzeugt das Anregungssignal für die Antriebs-/Empfangseinheit 13, wobei die Frequenzen des Anregungssignals innerhalb eines fest vorgegebenen Frequenzbandes liegen, welches von dem Sweepgenerator 41 durchfahren wird. Die Antriebs-/Empfangseinheit 13 wird hierdurch mit einem elektrischen Signal mit diskreten aufeinander folgenden Frequenzen beaufschlagt. Das Frequenzband umfasst hierbei die Resonanzfrequenz der schwingfähigen Einheit 11 bei Standardbedingungen, d.h. in Luft bei Normaldruck und Raumtemperatur, sowie in einem engen Bereich um diese Resonanzfrequenz liegende Frequenzen.

Die obere Grenzfrequenz des Frequenzbandes entspricht der höchsten in einem spezifizierten Temperatur- und Druckbereich vorkommenden Resonanzfrequenz der schwingfähigen Einheit; die untere Grenzfrequenz entspricht dementsprechend der niedrigsten in diesem Bereich auftretenden Resonanzfrequenz. Bei dem spezifizierten Temperaturbereich handelt es sich um den Temperaturbereich, in welchem das Messgerät 1 einsetzbar ist oder zumindest um einen Bereich, in welchem das Messgerät 1 typischerweise eingesetzt wird. Beispielsweise reicht der spezifizierte Temperaturbereich von -50°C bis +150°C. Bevorzugt liegen die Frequenzen, welche der Sweepgenerator 41 erzeugt, für genannten Temperaturbereich innerhalb eines Bereiches von -5% bis +5%, weiter bevorzugt von -3,5% bis + 3,5%, insbesondere von -3% bis +2% der Resonanzfrequenz bei Standardbedingungen. In einer Ausgestaltung, bei welcher auch eine mit leichtem Ansatz bedeckte oder geringfügig in das Medium eingetauchte schwingfähige Einheit 11 als "unbedeckt" signalisiert werden soll, liegt die untere Grenzfrequenz bei einer niedrigeren Frequenz, beispielsweise bei -15% der Resonanzfrequenz bei Standardbedingungen. Bei der Wahl des optimalen Frequenzbereichs für den Frequenzsweep ist beispielsweise das Material der schwingfähigen Einheit 11 zu berücksichtigen.

Die Sweepbandbreite des Sweepgenerators 41 ist fest vorgebbar oder je nach Anwendung des Messgerätes 1 individuell einstellbar. Eine derartige Einstellung ist durch die digitale Ausgestaltung der Elektronikeinheit 14 besonders einfach realisierbar. Die Sweepbandbreite ist somit optimal für die jeweiligen Einsatzbedingungen vorgebbar. Insbesondere für den Fall, dass das Messgerät 1 nur in einem engen Temperaturbereich eingesetzt wird, kann die Sweepbandbreite entsprechend schmal gewählt werden, sodass die Zeit, welche für einen Durchlauf des Frequenzbandes benötigt wird, minimiert werden kann.

Der Sweepgenerator 41 erzeugt das Anregungssignal mit diskreten Erregerfrequenzen. Die Schrittweite, mit welcher der Sweepgenerator das Frequenzband durchfährt, ist derart gewählt, dass das komplette Frequenzband innerhalb einiger 100 ms durchfahren wird. Vorzugsweise erfolgt eine kontinuierliche Anregung, d.h. an jeden Durchlauf schließt sich unmittelbar der nächste Durchlauf des Frequenzbandes an. Bei geeignet gewählter Schrittweite finden somit mindestens zwei, vorzugsweise drei oder mehr Durchläufe pro Sekunde statt. Je schneller der Sweepgenerator 41 den vorgegebenen Frequenzbereich durchfährt, desto schneller ist ein Antwortsignal verfügbar und desto schneller kann auf ein Erreichen des zu überwachenden Füllstands reagiert werden.

Das Frequenzband ist mit aufsteigenden oder absteigenden Frequenzen durchfahrbar. In einer Ausgestaltung schließt sich an eine Anregung in aufsteigender Richtung eine Anregung in absteigender Richtung an. Eine ständige Anregung in derselben Richtung ist jedoch ebenfalls möglich.

Im Stand der Technik erfolgt die Schwingungsanregung in der Regel über einen Schwingkreis, wobei das Empfangssignal aufbereitet und auf die Antriebs-/Empfangseinheit 13 rückgekoppelt wird. Das Ausgangssignal weist hierbei eine vorgebbare Phasenverschiebung relativ zu dem Empfangssignal auf. Auf diese Weise wird eine nachgeführte Zwangsanregung mit der jeweils aktuellen Resonanzfrequenz erreicht. Im Gegensatz hierzu wird die schwingfähige Einheit 11 erfindungsgemäß zu keiner Zeit zu einer Schwingung mit einer ungünstigen Phasenlage gezwungen. Das Anregungssignal wird unabhängig von dem Empfangssignal, d.h. ohne Feedback, erzeugt. Die Resonanzfrequenz wird nicht aktiv aufgesucht, sondern es wird lediglich überprüft, ob die Resonanzfrequenz innerhalb des vorgegebenen Frequenzbandes liegt.

Befindet sich die schwingfähige Einheit 11 in Luft oder in einem anderen Gas, liegt die aktuelle Resonanzfrequenz der schwingfähigen Einheit 11 innerhalb des Frequenzbandes, mit welchem der Sweepgenerator 41 das Anregungssignal erzeugt. Die Antriebs-/Empfangseinheit 13, welche das elektrische Anregungssignal in eine mechanische Bewegung umwandelt, regt die schwingfähige Einheit 11 zu resonanten Schwingungen an. Diese zeichnen sich durch ihre hohe Amplitude aus, welche sich in dem elektrischen Empfangssignal der Antriebs-/Empfangseinheit 13 widerspiegelt. Um die resonanten Schwingungen zu detektieren ist daher eine Bestimmung der Amplitude am besten geeignet. Zur Auswertung wird jedoch nicht die Resonanzfrequenz aufgesucht und die Amplitude bei dieser Frequenz gemessen, sondern das bei einem Sweepdurchgang empfangene Empfangssignal wird als Ganzes in Bezug auf die Amplitude ausgewertet. Die Bauteile zur Auswertung des Empfangssignals sind dazu ausgestaltet, das Vorliegen einer resonanten Schwingung innerhalb des angeregten Frequenzbandes zu detektieren, wobei es irrelevant ist, bei welcher der Frequenzen die Schwingung auftritt. Lediglich die Information über das Vorliegen der resonanten Schwingung innerhalb des angeregten Frequenzbereichs genügt, um eine zuverlässige Aussage darüber treffen zu können, dass die schwingfähige Einheit 11 frei von dem zu detektierenden Medium ist.

Die zur Auswertung des Empfangssignals und Erzeugung eines Ausgangssignals dienenden Komponenten der Elektronikeinheit 14 sind eine Filtereinheit 42, eine Triggereinheit 43 und eine Ausgangsstufe 44. Die Filtereinheit 42 filtert beispielsweise Signale, die durch Fremdvibrationen im Behälter oder einer angrenzenden Rohrleitung entstehen aus dem Empfangssignal heraus. Die Filtereinheit 42 verbessert das Verhältnis von Signal zu Rauschen. Beispielsweise schließt die Filtereinheit 42 einen Gleichrichter und mindestens ein Bauteil zur Glättung des Empfangssignals ein. In einer Ausgestaltung ist die Filtereinheit 42 analog ausgestaltet, während die übrigen Funktionselemente digital ausgestaltet sind, vorzugsweise als Funktionen eines Mikrocontrollers. Dem Mikrocontroller ist das durch die Filtereinheit 42 aufbereitete Empfangssignal zugeführt.

Die Triggereinheit 43 vergleicht die Amplitude des Empfangssignals mit einem vorgegebenen Schwellenwert und erzeugt ein Ausgangssignal, dessen Wert davon abhängt, ob der Schwellenwert über- oder unterschritten ist. Der Schwellenwert ist derart eingestellt, dass ein Überschreiten des Schwellenwertes mit einer frei schwingenden schwingfähigen Einheit 11 einhergeht. Bei einem zur Detektion eines maximalen Füllstands eingesetzten Messgerät 1 entspricht ein Überschreiten des Schwellenwertes dem Normalzustand. Ist die schwingfähige Einheit 11 mit dem zu detektierenden Medium bedeckt, findet auf Grund der medienbedingten Verschiebung der Resonanzfrequenz keine resonante Schwingung in dem angeregten Frequenzbereich mehr statt und der vorgegebene Schwellenwert wird nicht mehr überschritten, wodurch sich das Ausgangssignal der Triggereinheit 43 ändert.

Das Ausgangssignal der Triggereinheit 43 ist der Ausgangsstufe 44 als Steuersignal zugeführt. Beispielsweise ist die Ausgangsstufe 44 als Relais ausgestaltet. Die Ausgangsstufe 44 gibt ein Schaltsignal aus, welches anzeigt, ob die schwingfähige Einheit 11 mit dem zu detektierenden Medium bedeckt oder frei ist, d.h. ob der zu überwachende Füllstand erreicht ist. Dieses Schaltsignal stellt das Ausgangssignal des Messgerätes 1 dar und ist beispielsweise an eine Leitwarte oder nachgeordnete Feldgeräte, beispielsweise auch als Steuersignal an Pumpen oder Ventile, weiterleitbar.

Resonante Schwingungen im zu detektierenden Medium sind für die erfindungsgemäße Schwingungsanregung und -auswertung irrelevant, da nur die resonanten Schwingungen einer frei schwingenden, oder einer zumindest im Wesentlichen frei schwingenden, schwingfähigen Einheit 11 angeregt und ausgewertet werden. Somit kann auf üblicherweise in vibronischen Messgeräten 1 zahlreich vorhandene elektronische Bauteile verzichtet werden, welche dazu dienen, eine resonante Schwingung in beliebig dichten oder viskosen Medien zu erzielen. Dies spart nicht nur Platz, sondern auch Kosten. Weiterhin ermöglicht es die erfindungsgemäße Ausgestaltung der Elektronikeinheit 14, das Erreichen eines zu überwachenden Füllstands sehr schnell zu detektieren. Hierdurch können gegebenenfalls erforderliche Maßnahmen wie das Stoppen weiterer Mediumszufuhr rechtzeitig ergriffen werden. Weiterhin ist das Messgerät 1 auch als Min-Schalter zur Überwachung eines minimalen Füllstands einsetzbar.

In einer Ausgestaltung erzeugt der Sweepgenerator 41 für den Fall, dass in dem angeregten Frequenzband keine resonante Schwingung vorhanden ist, d.h. das Empfangssignal den Schwellenwert nicht überschreitet, ein Anregungssignal mit Frequenzen innerhalb eines zweiten Frequenzbandes. Analog zu dem ersten Frequenzband durchfährt der Sweepgenerator 41 das zweite Frequenzband mit diskreten aufeinanderfolgenden Frequenzen. Das zweite Frequenzband schließt sich oben an das erste Frequenzband an, d.h. es umfasst Frequenzen, welche oberhalb der oberen Grenzfrequenz des ersten Frequenzbandes liegen. Das zweite Frequenzband kann auch beabstandet von dem ersten Frequenzband angeordnet sein, sodass weitere Frequenzen zwischen der oberen Grenzfrequenz des ersten Frequenzbandes und der unteren Grenzfrequenz des zweiten Frequenzbandes liegen, welche der Sweepgenerator 41 nicht erzeugt.

Durch die Anregung der schwingfähigen Einheit 11 in dem zweiten Frequenzbereich mit gegenüber dem ersten Frequenzband höheren Frequenzen ist eine Erkennung von an der schwingfähigen Einheit 11 auftretender Korrosion ermöglicht. Korrosion führt zu einer Erhöhung der Resonanzfrequenz, sodass die Resonanzfrequenz der schwingfähigen Einheit 11 mit zunehmender Korrosion aus dem durch den Frequenzsweep abgedeckten Frequenzbereich herausdriftet. Durch die Anregung des zweiten Frequenzbandes ist eine solche korrosionsbedingte Verschiebung der resonanten Schwingung detektierbar. Somit kann bei einer fehlenden Schwingung im ersten Frequenzband unterschieden werden, ob das Fehlen der Schwingung durch eine Bedeckung mit dem zu detektierenden Medium oder eine Fehlfunktion des Messgerätes bedingt ist, oder aber auf Korrosion zurückzuführen ist. Die Korrosionsüberprüfung mittels der Anregung innerhalb des zweiten Frequenzbands kann unmittelbar nach der Detektion des Fehlens einer Schwingung im ersten Frequenzband, oder, falls über längere Zeit keine Schwingung im ersten Frequenzband stattfindet, wiederkehrend in bestimmten zeitlichen Abständen durchgeführt werden.

Ein bevorzugter Bereich des zweiten Frequenzbandes reicht von einer unteren Grenzfrequenz, welche 105% der Resonanzfrequenz bei Standardbedingungen entspricht, bis zu einer oberen Grenzfrequenz, welche 107% dieser Resonanzfrequenz entspricht.

Der Korrosionsalarm ist beispielsweise in Form eines optischen Signals mittels einer Leuchtdiode oder mittels eines elektrischen Ausgangssignals anzeigbar. In einer Ausgestaltung enthält das über die Ausgangsstufe 44 ausgegebene Ausgangssignal als erste Information den Grenzstand und als zweite Information die Angabe, ob Korrosion aufgetreten ist oder nicht. Beispielsweise zeigt das Messgerät 1 dann an, dass der Grenzstand nicht erreicht ist und die schwingfähige Einheit 11 frei schwingt, dass jedoch Korrosion aufgetreten ist. In einer anderen Ausgestaltung wird bei Korrosion dasselbe Ausgangssignal erzeugt, welches auch bei einem Erreichen des Grenzstands erzeugt wird und über einen zweiten Signalausgang wird ein Signal ausgegeben, welches das Vorliegen von Korrosion oder allgemein eine erforderliche Wartung des Messgeräts 1 anzeigt.

### Bezugszeichenliste

- 1: Messgerät
- 11: Schwingfähige Einheit
- 12: Gehäuse
- 13: Antriebs-/Empfangseinheit
- 14: Elektronikeinheit
- 15: Sendepfad
- 16: Empfangspfad
- 2: Behälter
- 3: Flüssigkeit
- 41: Sweepgenerator
- 42: Filtereinheit
- 43: Triggereinheit
- 44: Ausgangsstufe

## Patentansprüche

1. Vorrichtung (1) zur Überwachung eines vorbestimmten Füllstands eines Mediums (3) in einem Behälter (2), mit einer mechanisch schwingfähigen Einheit (11), mit einer Antriebs-/Empfangseinheit (13) zum Anregen der mechanisch schwingfähigen Einheit (11) zu mechanischen Schwingungen und zum Empfangen der Schwingungen der mechanisch schwingfähigen Einheit (11), und mit einer Elektronikeinheit (14) zur Erzeugung eines elektrischen Anregungssignals und zur Auswertung eines elektrischen Empfangssignals, wobei die Elektronikeinheit (14) dazu ausgestaltet ist,
die mechanisch schwingfähige Einheit (11) mittels der Antriebs-/Empfangseinheit (13) innerhalb eines fest vorgegebenen Frequenzbandes mit diskreten aufeinander folgenden Erregerfrequenzen zu mechanischen Schwingungen anzuregen,
**dadurch gekennzeichnet, dass**
das Frequenzband die Resonanzfrequenz der mechanisch schwingfähigen Einheit (11) bei einer Schwingung unter Standardbedingungen, d.h. in Luft bei Normaldruck und Raumtemperatur, enthält und einen Frequenzbereich mit Frequenzen aufweist, die höchstens 15% von der Resonanzfrequenz bei Standardbedingungen abweichen, wobei das Anregungssignal nicht mit Frequenzen erzeugt wird, mit denen eine Schwingung der mechanisch schwingfähigen Einheit (11) im festen oder flüssigen Medium bei vollständig eingetauchter schwingfähiger Einheit anregbar wäre,
und dass die Elektronikeinheit (14) dazu ausgestaltet ist, zu detektieren, ob innerhalb des vorgegebenen Frequenzbandes eine Schwingung der mechanisch schwingfähigen Einheit (11) auftritt, deren Amplitude einen vorgegebenen Schwellenwert überschreitet, und das Erreichen des vorbestimmten Füllstands anhand eines Ausbleibens der Schwingung oder das Unterschreiten des vorbestimmten Füllstands anhand eines Einsetzens der Schwingungen der mechanisch schwingfähigen Einheit zu detektieren.

2. Vorrichtung nach Anspruch 1,
**dadurch gekennzeichnet,**
**dass** die Elektronikeinheit (14) die Amplitude des elektrischen Empfangssignals der Antriebs-/Empfangseinheit (13) detektiert und mit einem vorgegebenen Grenzwert vergleicht.

3. Vorrichtung nach Anspruch 1 oder 2,
**dadurch gekennzeichnet,**
**dass** das Frequenzband Frequenzen zwischen 85% und 105%, insbesondere zwischen 95% und 102% der Resonanzfrequenz bei Standardbedingungen beinhaltet.

4. Vorrichtung nach einem der vorangehenden Ansprüche,
**dadurch gekennzeichnet,**
**dass** die Elektronikeinheit (14) derart konfiguriert ist, dass das Frequenzband mehrfach pro Sekunde durchfahren wird.

5. Vorrichtung nach einem der vorangehenden Ansprüche,
**dadurch gekennzeichnet,**
**dass** die Elektronikeinheit (14) dazu ausgestaltet ist, die mechanisch schwingfähige Einheit (11) mit Frequenzen innerhalb eines zweiten vorgegebenen Frequenzbands anzuregen, wobei die Frequenzen des zweiten Frequenzbands oberhalb der Frequenzen des ersten Frequenzbands liegen, und eine Schwingung innerhalb des zweiten Frequenzbands zu detektieren, deren Amplitude einen vorgegebenen Schwellenwert übersteigt,
und
**dass** die Elektronikeinheit (14) für den Fall, dass die Amplitude den Schwellenwert übersteigt, ein Alarmsignal erzeugt.

6. Vorrichtung nach dem vorangehenden Anspruch,
**dadurch gekennzeichnet,**
**dass** das zweite Frequenzband Frequenzen zwischen 105% und 107% der Resonanzfrequenz bei Standardbedingungen umfasst.

7. Vorrichtung nach einem der vorangehenden Ansprüche,
**dadurch gekennzeichnet,**
**dass** die Elektronikeinheit (14) zumindest teilweise als Mikrocontroller ausgestaltet ist.

8. Vorrichtung nach einem der vorangehenden Ansprüche,
**dadurch gekennzeichnet,**
**dass** die Antriebs-/Empfangseinheit (13) mindestens ein piezoelektrisches Element aufweist.

9. Vorrichtung nach einem der vorangehenden Ansprüche,
**dadurch gekennzeichnet,**
**dass** die schwingfähige Einheit (11) als Schwinggabel, Stab, oder Membran ausgestaltet ist.

## Claims

1. Apparatus (1) for monitoring a predefined level of a medium (3) in a vessel (2) with a unit capable of vibrating mechanically (11), a drive/reception unit (13) designed to excite the unit capable of vibrating mechanically (11) to produce mechanical vibrations and to receive the vibrations of the unit capable of vibrating mechanically (11), and an electronic unit (14) designed to generate an electrical excitation signal and to evaluate an electrical reception signal,
wherein, using the drive/reception unit (13), the electronic unit (14) is designed to excite the unit capable of vibrating mechanically (11) to produce mechanical vibrations within a fixed, predefined frequency band with discrete consecutive excitation frequencies,
**characterized in that** the frequency band contains the resonance frequency of the unit capable of vibrating mechanically (11) during a vibration under standard conditions, i.e. in air at normal pressure and room temperature, and has a frequency range with frequencies that deviate by a maximum of 15 % from the resonance frequency at standard conditions, wherein the excitation signal is not generated with frequencies with which a vibration of the unit capable of vibrating mechanically (11) could be excited in the solid or liquid medium if the unit capable of vibrating is fully immersed,
and **in that** the electronic unit (14) is designed to detect the occurrence or not of a vibration - of the unit capable of vibrating mechanically (11) - whose amplitude exceeds a defined threshold within the predefined frequency, and to detect the reaching of the predefined level on the basis of the absence of the vibration, or the undershooting of the predefined level on the basis of the occurrence of the vibrations of the unit capable of vibrating mechanically.

2. Apparatus as claimed in Claim 1,
**characterized in that**
the electronic unit (14) detects the amplitude of the electrical reception signal of the drive/reception unit (13) and compares it to a predefined limit value.

3. Apparatus as claimed in Claim 1 or 2,
**characterized in that**
the frequency band comprises frequencies between 85 % and 105 %, particularly between 95 % and 102 % of the resonance frequency at standard conditions.

4. Apparatus as claimed in one of the previous claims,
**characterized in that**
the electronic unit (14) is configured to pass through the frequency band several times a second.

5. Apparatus as claimed in one of the previous claims,
**characterized in that**
the electronic unit (14) is designed to excite the unit capable of vibrating mechanically (11) with frequencies within a second predefined frequency band, wherein the frequencies of the second frequency band are above the frequencies of the first frequency band, and to detect a vibration within the second frequency band whose amplitude exceeds a predefined threshold value,
and
**in that** the electronic unit (14) generates an alarm signal in the event that the amplitude exceeds the threshold value.

6. Apparatus as claimed in the previous claim,
**characterized in that**
the second frequency band comprises frequencies between 105 % and 107 % of the resonance frequency at standard conditions.

7. Apparatus as claimed in one of the previous claims,
**characterized in that**
the electronic unit (14) is at least partially designed as a microcontroller.

8. Apparatus as claimed in one of the previous claims,
**characterized in that**
the drive/reception unit (13) has at least one piezoelectric element.

9. Apparatus as claimed in one of the previous claims,
**characterized in that**
the unit capable of vibrating (11) is a tuning fork, a rod or a membrane.

## Revendications

1. Dispositif (1) destiné à la surveillance d'un niveau prédéfini d'un produit (3) dans un réservoir (2), lequel dispositif comprend une unité apte à vibrer mécaniquement (11), une unité d'entraînement / de réception (13) destinée à exciter l'unité apte à vibrer mécaniquement (11) en vibrations mécaniques et à recevoir les vibrations de l'unité apte à vibrer mécaniquement (11), et une unité électronique (14) destinée à générer un signal d'excitation électrique et à exploiter un signal de réception électrique,
l'unité électronique (14) étant conçue pour
exciter en vibrations mécaniques l'unité apte à vibrer mécaniquement (11) au moyen de l'unité d'entraînement / de réception (13) dans une bande de fréquence prédéfinie de façon fixe avec des fréquences d'excitation successives discrètes, **caractérisé en ce que** la bande de fréquence contient la fréquence de résonance de l'unité apte à vibrer mécaniquement (11) lors d'une vibration dans des conditions standard, c'est-à-dire dans l'air à la pression normale et à la température ambiante, et présente une gamme de fréquences avec des fréquences qui s'écartent au maximum de 15 % de la fréquence de résonance dans des conditions standard, le signal d'excitation n'étant pas généré avec des fréquences avec lesquelles une vibration de l'unité apte à vibrer mécaniquement (11) dans le produit solide ou liquide pourrait être excitée avec l'unité apte à vibrer complètement immergée,
et **en ce que** l'unité électronique (14) est conçue pour détecter si, à l'intérieur de la bande de fréquence prédéfinie, une vibration de l'unité apte à vibrer mécaniquement (11) se produit, dont l'amplitude dépasse une valeur seuil prédéfinie, et pour détecter l'atteinte du niveau prédéfini sur la base d'une absence de vibration ou le passage sous le niveau prédéfini sur la base d'une apparition des vibrations de l'unité apte à vibrer mécaniquement.

2. Dispositif selon la revendication 1,
**caractérisé**
**en ce que** l'unité électronique (14) détecte l'amplitude du signal électrique de réception de l'unité d'entraînement / de réception (13) et la compare à une valeur seuil prédéfinie.

3. Dispositif selon la revendication 1 ou 2,
**caractérisé**
**en ce que** la bande de fréquence comprend des fréquences comprises entre 85 % et 105 %, notamment entre 95 % et 102 % de la fréquence de résonance aux conditions standard.

4. Dispositif selon l'une des revendications précédentes,
**caractérisé**
**en ce que** l'unité électronique (14) est configurée pour balayer la bande de fréquence plusieurs fois par seconde.

5. Dispositif selon l'une des revendications précédentes,
**caractérisé**
**en ce que** l'unité électronique (14) est conçue pour exciter l'unité apte à vibrer mécaniquement (11) avec des fréquences à l'intérieur d'une deuxième bande de fréquence prédéfinie, les fréquences de la deuxième bande de fréquence étant supérieures aux fréquences de la première bande de fréquence, et pour détecter une vibration à l'intérieur de la deuxième bande de fréquence, dont l'amplitude dépasse une valeur seuil prédéfinie,
et
**en ce que** l'unité électronique (14) génère un signal d'alarme dans le cas où l'amplitude dépasse la valeur seuil.

6. Dispositif selon la revendication précédente,
**caractérisé**
**en ce que** la deuxième bande de fréquence comprend des fréquences comprises entre 105 % et 107 % de la fréquence de résonance aux conditions standard.

7. Dispositif selon l'une des revendications précédentes,
**caractérisé**
**en ce que** l'unité électronique (14) est au moins partiellement conçue en tant que microcontrôleur.

8. Dispositif selon l'une des revendications précédentes,
**caractérisé**
**en ce que** l'unité d'entraînement / de réception (13) comprend au moins un élément piézoélectrique.

9. Dispositif selon l'une des revendications précédentes,
**caractérisé**
**en ce que** l'unité apte à vibrer (11) est une fourche vibrante, une tige ou une membrane.
